# EUROPÄISCHE PATENTANMELDUNG

(11) **EP 3 457 011 A1**
(43) Veröffentlichungstag der Anmeldung: **20.03.2019**
(21) Anmeldenummer: 18194485.1
(22) Anmeldetag: 14.09.2018
(51) Int. Cl.: F16K 17/30, F15B 13/02, G05D 7/01

(54) **MENGENREGLER**

(30) Priorität: 19.09.2017 DE 102017121718
(71) Anmelder: A. u. K. Müller GmbH & Co. KG, 40595 Düsseldorf (DE)
(72) Erfinder:
(74) Vertreter: Feder Walter Ebert

(57) **Zusammenfassung**

Die vorliegende Erfindung befasst sich mit einem Mengenregler zur selbstständigen Mengenregelung eines Fluidstroms mit mindestens zwei gegeneinander bewegbaren, einen Regelspalt begrenzenden Regelelementen (101, 102), wobei die Spaltweite des Regelspalts über eine Relativbewegung der Regelelemente druckabhängig einstellbar ist, wobei die Regelelemente als formstabile Anströmkörper ausgebildet sind.

## Beschreibung

Die vorliegende Erfindung betrifft einen Mengenregler zur selbstständigen Mengenregelung eines Fluidstroms mit mindestens zwei gegeneinander bewegbaren, einen Regelspalt begrenzenden Regelelementen, wobei die Spaltweite des Regelspalts über eine Relativbewegung der Regelelemente druckabhängig einstellbar ist. Einen weiteren Gegenstand der Erfindung bildet ein Ventil zum Schalten eines Fluidstroms.

Derartige Mengenregler kommen in unterschiedlichen Ausführungen zur Anwendung. Sie regeln die Menge eines durch sie hindurchströmenden Fluidstroms, d. h. das pro Zeiteinheit durch sie strömende Volumen des Fluids. Mengenregler weisen hierzu einen Regelspalt auf, welcher eine Engstelle des Strömungsquerschnitts entlang der Strömungsrichtung des Fluidstroms schafft. Der Regelspalt begrenzt die maximal mögliche Menge des Fluidstroms durch den Mengenregler. Diese maximal mögliche Menge hängt von dem anströmseitigen Druck des Fluidstroms und der Spaltweite des Regelspalts ab. Bei gleichem Druck strömt bei einer größeren Spaltweite eine größere Menge des Fluids durch den Mengenregler. Ebenso strömt bei gleicher Spaltweite und einem höheren anströmseitigen Druck des Fluidstroms eine größere Menge durch den Mengenregler als bei niedrigem Druck. Bei einem Mengenregler mit selbstständiger Mengenregelung erfolgt daher eine Anpassung der Spaltweite an den Druck des Fluidstroms. Auf diese Weise kann der Mengenregler die Menge des Fluidstroms druckunabhängig konstant halten. Die maximal mögliche Menge des Fluidstroms durch den Mengenregler wird somit unabhängig von dem anströmseitigen Druck des Fluids geregelt.

Mengenregler mit selbstständiger Mengenregelung weisen mindestens zwei Regelelemente auf, welche den zwischen ihnen liegenden Regelspalt begrenzen und so zu einem kleineren Strömungsquerschnitt entlang des Fluidstroms führen. Um die Spaltweite des Regelspalts einzustellen, sind die beiden Regelelemente durch den anströmseitigen Druck des Fluidstroms gegeneinander bewegbar. Eine Relativbewegung der Regelelemente führt zu einer Vergrößerung oder Verkleinerung des Regelspalts. Die Relativbewegung der Regelelemente erfolgt dabei derart druckabhängig, dass bei einer Druckerhöhung die Spaltweite durch die Relativbewegung der Regelelemente kleiner und bei einer Druckminderung größer eingestellt wird. Durch die Relativbewegung der Regelelemente kann dabei der Einfluss des anströmseitigen Drucks des Fluidstroms ausgeglichen und eine druckunabhängige Mengenregelung erzielt werden.

Mindestens eines der Regelelemente ist bei bekannten Mengenreglern mit selbstständiger Mengenregelung elastisch verformbar ausgebildet und besteht aus einem elastischen Material. Ein solcher Mengenregler ist beispielsweise aus der DE 10 2006 057 787 B3 bekannt, bei dem das elastisch verformbare Regelelement als Torus ausgebildet ist. Durch den anströmseitigen Druck des Fluidstroms verformt sich das Regelelement derart, dass es entlang der Strömungsrichtung des Fluidstroms gestaucht wird. Im Wesentlichen quer zur Strömungsrichtung des Fluidstroms dehnt sich das verformbare Regelelement dabei in Richtung eines zweiten Regelelements aus. Die Spaltweite des von den Regenelementen begrenzten Regelspalts wird durch dieses Ausdehnen verkleinert. Nimmt der anströmseitige Druck des Fluidstroms ab, kann das elastische Regelelement sich zurückverformen und seine nicht gestauchte Form wieder annehmen.

Die selbstständige Mengenregelung ist bei den bekannten Mengenreglern von dem elastischen Verhalten des verformbaren Regelelements abhängig. Das Regelelement muss sich dabei abhängig von dem anströmseitigen Druck so verformen und die Spaltweite verändern, dass der Einfluss des anströmseitigen Drucks auf die Menge des Fluidstroms ausgeglichen wird. Das elastische Verhalten des Regelelements hängt aber auch von Eigenschaften des Fluids ab, wie beispielsweise Änderungen der Temperatur oder der chemischen Reaktivität des Fluids. Solche Einflüsse durch das Fluid wirken sich auf das elastische Verhalten des Regelelements und somit auch auf die Mengenreglung aus. So kann beispielsweise durch eine steigende Fluidtemperatur das Regelelement weicher und einfacher verformbar werden, so dass es sich bei gleichem Druck stärker verformt und eine kleinere Spaltweite einstellt. Der Einfluss des anströmseitigen Drucks auf die Menge des Fluidstroms wird dabei überkompensiert. Die Mengenregelung ist im Bereich solcher Einflüsse des Fluids nicht mehr druckunabhängig, da der Druck einen Einfluss auf die Menge des Fluidstroms hat.

Die **Aufgabe** vorliegende Erfindung liegt daher darin, einen Mengenregler anzugeben, dessen Mengenregelung gegenüber Einflüssen des Fluids und insbesondere Änderungen der Temperatur des Fluid, weniger anfällig ist. Diese Aufgabe wird bei einem Mengenregler der eingangs genannten Art dadurch **gelöst,** dass die Regelelemente als formstabile Anströmkörper ausgebildet sind.

Formstabile Anströmkörper zeichnen sich durch eine unelastische, feste Form aus. Sie können beispielsweise in einem Spritzgussverfahren, durch plastisches Formen oder durch spanende Bearbeitung hergestellt werden. Unter dem anströmseitigen Druck des Fluidstroms durch den Mengenregler behalten die formstabilen Anströmkörper daher ihre Formen bei. Die Einstellung der Spaltweite des Regelspalts kann durch eine Relativbewegung nicht aber eine temperaturabhängige Verformung der Regelelemente erfolgen.

In vorteilhafter Weise bestehen die formstabilen Anströmkörper aus temperaturbeständigem Material, wie beispielsweise Hartkunststoff, Metall, Duroplast, Keramik, Thermoplast oder Glas. Auf formstabile Anströmkörper aus temperaturbeständigem Material können sich Temperaturänderungen des Fluids nicht auswirken. Eine Beeinflussung der Mengenregelung durch sich verändernde Temperaturen des Fluids kann auf einfache Weise entgegengewirkt werden. Insbesondere formstabile Anströmkörper aus Metall, Keramik oder Glas können beständig gegen ein chemisch reaktives Fluid sein. Ein Mengenregler mit Regelelementen aus Metall, Keramik oder Glas kann zur Regelung chemisch reaktiver Fluide eingesetzt werden.

Gemäß einer konstruktiven Ausgestaltung wird vorgeschlagen, dass die Regelelemente in Richtung einer Strömungsrichtung relativ bewegbar sind. In Richtung der Strömungsrichtung relativ bewegbare Regelelemente können auf besonders einfache Weise zur selbstständigen Mengenregelung durch den anströmseitigen Druck des Fluidstroms durch den Mengenregler bewegt werden.

Weiter vorteilhaft ist es, wenn mindestens ein erstes Regelelement einen variierenden Querschnitt mit einem entlang der Strömungsrichtung verlaufenden Querschnittsverlauf aufweist, insbesondere nach Art einer Pyramide, eines Kegels, eines Pyramidenstumpfs, eines Kegelstumpfs und/oder eines Keils. Durch einen variierenden Querschnitt mindestens des ersten Regelelements kann die Spaltweite des Regelspalts bei der Relativbewegung der Regelelemente geändert werden. Die Spaltweite kann von dem Querschnittsverlauf entlang der Strömungsrichtung vorgegeben sein. Die Änderung der Spaltweite kann auf einer Seite oder auf mehreren Seiten des ersten Regelelements erfolgen. Ein Querschnittsverlauf nach Art einer Pyramide, eines Kegels, eines Pyramidenstumpfs oder eines Kegelstumpfs kann die Spaltweite des Regelspalts auf mehreren Seiten des ersten Regelelements und insbesondere ganzumfänglich ändern. Ein Querschnittsverlauf nach Art eines Keils, bei welchem mindestens eine Seite des Querschnitts im Wesentlichen parallel zur Strömungsrichtung verläuft, kann die Spaltweite des Regelspalts auf einer Seite oder auf mehreren Seiten des ersten Regelelements ändern. Der Querschnittsverlauf kann insbesondere der Verlauf des Querschnitts des Materials des ersten Regelelements sein. Auch komplementäre Querschnitte, bei denen Materialausnehmungen des ersten Regelelements nach den genannten Arten verlaufen, können Querschnittsverläufe sein. Ebenfalls können mehreren Querschnittsverläufe, insbesondere der beschriebenen Arten, zu einem Querschnittsverlauf kombiniert werden.

In einer Weiterbildung der Erfindung weist der Querschnittsverlauf stufenförmige, insbesondere unterschiedliche Querschnittssprünge auf. Durch stufenförmige Querschnittssprünge kann die Einstellung der Spaltweite auf konstruktiv einfache Weise an mehrere Druckbereiche angepasst erfolgen. Unterschiedliche Querschnittssprünge können die relativen Änderungen der Spaltweite für angrenzende Druckbereiche voneinander abweichend vornehmen.

Eine weitere Ausgestaltung sieht vor, dass der Querschnittsverlauf im Wesentlichen stetig, insbesondere geschwungen verläuft. Durch einen im Wesentlichen stetigen Querschnittsverlauf kann die Spaltweite des Regelspalts bei einer Relativbewegung der Regelelemente im Wesentlichen stetig eingestellt werden. Querschnittssprünge, welche zu einer abrupten Änderung des Querschnitts führen, sind bei einem im Wesentlichen stetigen Querschnittsverlauf nicht vorhanden. Die Mengenregelung kann durch ein stetiges Einstellen der Spaltweite die Druckabhängigkeit der Menge des Fluidstroms durch den Mengenregler besonders gut ausgleichen. Ein geschwungener Querschnittsverlauf kann eine unterschiedliche Änderung der Spaltweite in einzelne Druckbereiche ermöglichen. Der geschwungene Querschnittsverlauf kann zusätzlich oder alternativ einen stetigen Übergang bei der Einstellung der Spaltweite des Regelspalts zwischen unterschiedlichen Druckbereichen ermöglichen.

Weiter vorteilhaft ist es, wenn das erste Regelelement feststeht und ein zweites Regelelement bewegbar ist. Eine Relativbewegung der beiden Regelelemente kann bei einem feststehenden ersten Regelelement und einem bewegbaren zweiten Regelelement auf konstruktiv einfache Weise erfolgen. Eine geführte Lagerung für das erste Regelelement kann entfallen. Die Anzahl der beweglichen Komponenten kann reduziert werden.

Gemäß einem Ausführungsbeispiel der Erfindung sind die Regelelemente durch den Druck des Fluidstroms, insbesondere entgegen einer Rückstellkraft, aufeinander zubewegbar. Der Druck des Fluidstroms kann auf konstruktiv besonders einfache Art die Regelelemente aufeinander zubewegen. Die Spaltweite kann durch den Druck des Fluidstroms zur Regelung der Menge des durch den Mengenregler tretenden Fluidstroms verringert werden. Eine entgegen dem Druck des Fluidstroms gerichtete Rückstellkraft kann bei einer Druckabnahme die Regelelemente voneinander wegbewegen.

Vorzugsweise übt ein Rückstellelement eine Rückstellkraft zum Bewegen der Regelelemente in ihre Ausgangsstellungen auf mindestens ein Regelelement aus, insbesondere bei sich aufeinander zubewegenden Regelelementen. Das Rückstellelement kann durch die, insbesondere entgegen der Strömungsrichtung gerichtete, Rückstellkraft die Regelelemente in ihre Ausgangsstellungen, welche sie ohne anströmseitigen Druck des Fluids einnehmen, bewegen. Die Rückstellkraft kann insbesondere abhängig von der relativen Bewegung der beiden Regelelemente unterschiedlich stark sein. Bei einer zunehmen Relativbewegung der Regelelemente aufeinander zu, kann die Rückstellkraft ansteigen und dem Druck des Fluids ausgleichen. Besonders vorteilhaft kann das Rückstellelement als Feder ausgebildet sein. Eine Feder kann vom anströmseitigen Druck des Fluids zur Relativbewegung der Regelelemente aufgebrachte Energie speichern und bei einer Abnahme des Drucks des Fluidstroms diese Energie, zumindest teilweise, abrufen um die Regelelemente in Richtung ihrer Ausgangsstellungen zu bewegen.

In einer Weiterbildung der Erfindung ist ein Regelelement als Regelblende, insbesondere als ringförmige Regelblende, mit einer Durchgangsausnehmung ausgebildet. Durch die Durchgangsausnehmung einer Regelblende kann in konstruktiv einfacher Weise der Regelspalt begrenzt werden. Insbesondere eine ringförmige Regelblende kann eine fertigungstechnisch vorteilhafte Ausgestaltung darstellen. Bevorzugt kann die Regelblende nach Art eines zweiten Regelelements ausgebildet sein. Gleichwohl kann die Regelblende auch nach Art eines ersten Regelelements ausgebildet sein.

Bei einer bevorzugten Ausgestaltung der Erfindung tritt ein zapfenförmiges Regelelement zur Einstellung der Spaltweite des Regelspalts in die Durchgangsausnehmung ein. Das zapfenförmige Regelelement kann entlang des Fluidstroms durch den Mengenregler länger, als quer zum Fluidstrom breit sein. Die Grundfläche des zapfenförmigen Regelelements kann mehreckig, insbesondere rechteckig oder quadratisch, oder rund, insbesondere kreisförmig oder oval, sein. Vorteilhafter Weise kann die Form der Grundfläche des zapfenförmigen Regelelements an die Form der Durchgangsausnehmung der Regelblende angepasst sein. Bevorzugt kann das zapfenförmige Regelelement nach Art eines ersten Regelelements ausgebildet sein. Gleichwohl kann das zapfenförmige Regelelement auch nach Art eines zweiten Regelelements ausgebildet sein.

Ferner kann es vorteilhaft sein, wenn die Regelblende entlang der Strömungsrichtung schwimmend gelagert ist. Eine schwimmend gelagerte Regelblende kann in radialer Richtung ein Spiel aufweisen. Durch das Spiel kann ein mechanisches Verspannen der Regelblende verhindert werden.

Eine weitere Ausgestaltung sieht vor, dass eines der Regelelemente einen Bypass umfasst. Einen Bypass kann einen Teil des Fluidstroms durch den Mengenregler an dem Regelspalt vorbei führen. Bei einem geschlossenen Regelspalte mit einer Spaltweite gleich Null, kann über den Bypass noch ein Teil des Fluidstroms durch den Mengenregler treten.

Weiter vorteilhaft ist es, wenn die Regelelemente in einem Regelgehäuse angeordnet sind und ein Regelelement gegenüber dem Regelgehäuse feststeht. Durch eine Anordnung der Regelelemente in einem Regelgehäuse kann der Mengenregler auf einfache Weise als eine Einheit verbaut werden. Ein gegenüber dem Regelgehäuse feststehendes Regelelement kann auf fertigungstechnisch einfache Art in dem Regelgehäuse angeordnet werden. Die Anzahl beweglicher Teile kann reduziert werden. Vorteilhafter Weise kann das feststehende Regelelement einstückig mit dem Regelgehäuse ausgebildet sein.

In einer vorteilhaften Weiterbildung kann es konstruktiv vorgesehen sein, dass eine Innenwandung des Regelgehäuses die Bewegung eines Regelelements führt. Eine Führung der Bewegung eines Regelelements kann ein verkannten des Regelelements verhindern. Durch eine Führung durch die Innenwandung des Regelgehäuses kann kostensparend ein Führungselement eingespart werden.

Bei einem Ventil zum Schalten eines Fluidstroms wird zur **Lösung** der vorstehend genannten Aufgabe vorgeschlagen, einen vorangehend beschriebenen Mengenregler vorzusehen. Es ergeben sich die bereits zuvor beschriebenen Vorteile.

Nachfolgend wird noch näher auf weitere Ausführungen eines solchen Ventils eingegangen werden.

Bevorzugt umfasst das Ventil zum Schalten eines Fluidstroms einen Ventileinlass und einen Ventilauslass, die von dem Fluidstrom entlang einer Hauptströmungsrichtung axial durchströmbar angeordnet sind, wobei zwischen dem Ventileinlass und dem Ventilauslass mindestens zwei separat betätigbare Ventileinheiten zum Schalten von Teilmengen des Fluidstroms angeordnet sind.

Durch die axiale Durchströmbarkeit kann eine kompakte Bauweise erzielt werden, wobei gleichzeitig durch die separat betätigbaren Ventileinheiten jede Ventileinheit eine Teilmenge des Fluidstroms freigeben oder blockieren kann. Wenn sämtliche Ventileinheiten eine geöffnete Schaltstellung einnehmen, ist das Ventil vollständig geöffnet und der Fluidstrom kann als Ganzes freigegeben werden. Nehmen sämtliche Ventileinheiten eine geschlossene Schaltstellung ein, ist das Ventil geschlossen und der Fluidstrom kann als Ganzes blockiert werden. Wenn einige Ventileinheiten eine geschlossene Schaltstellung und die übrigen Ventileinheiten eine geöffnete Schaltstellung einnehmen, werden nur Teilmengen des Fluidstroms blockiert, während andere freigegeben werden. Das Ventil als Ganzes kann dabei eine Zwischenschaltstellung zwischen der geschlossenen und der geöffneten Schaltstellung einnehmen. Abhängig von der Anzahl der Ventileinheiten kann sich eine unterschiedliche Anzahl von Zwischenschaltstellungen des Ventils ergeben. Bei zwei Ventileinheiten können sich beispielsweise vier Schaltstellungen ergeben, wovon zwei Zwischenschaltstellungen sind.

Die Anzahl der Zwischenschaltstellungen kann auch von der Ansteuerung der Ventileinheiten abhängen. So können die einzelnen Ventileinheiten parallel oder einzeln geschaltet werden. Bei einer parallelen Ansteuerung können zusammengeschaltete Ventileinheiten gleichzeitig betätig werden und dabei eine Teilmenge des Fluidstroms schalten, welcher sich aus den einzelnen von den zusammengeschalteten Ventileinheiten schaltbaren Teilmengen ergibt. Bei einer einzelnen Ansteuerung der Ventileinheiten kann jede Ventileinheit separat betätigt werden. Durch die einzelne Ansteuerung kann die größte Anzahl an Zwischenschaltstellungen des Ventils erreicht werden. Einzelne oder alle voranstehenden Ansteuerungen der Ventileinheiten können auch miteinander kombiniert werden.

Die Ventileinheiten können derart angeordnet sein, dass sich ein symmetrisch aufgebautes Ventil ergibt, insbesondere ein drehsymmetrisches Ventil. Ein symmetrisches Ventil kann einen Einbau des Ventils vereinfachen. Die Ventileinheiten können auch derart angeordnet sein, dass sich ein asymmetrisches Ventil ergibt. Durch ein asymmetrisches Ventil kann ein zum Einbau des Ventils zur Verfügung stehender Bauraum besser ausnutzbar sein.

Vorzugsweise sind der Ventileinlass und der Ventilauslass parallel und insbesondere koaxial zueinander angeordnet. Eine parallele Anordnung kann eine Ausrichtung des Ventileinlasses und des Ventilauslasses entlang der Hauptströmungsrichtung ermöglichen. Durch eine koaxiale Anordnung von Ventileinlass und Ventilauslass kann das Ventil auf einfache Weise in einem geraden Abschnitt einer Fluidleitung einbindbar sein, ohne dass sich ein seitlicher Versatz der Strömung vor und hinter dem Ventil ergibt.

In einer konstruktiven Ausgestaltung der Erfindung sind die Ventileinheiten derart angeordnet, dass die Strömungsrichtung der Ventileinheiten quer zur Hauptströmungsrichtung verläuft. Auf diese Weise können die Ventileinheiten radial zu der Hauptströmungsrichtung angeordnet werden. Durch eine radiale Anordnung der Ventileinheiten kann das Ventil quer zu der Hauptströmungsrichtung auf konstruktiv vorteilhafte Weise kompakt gehalten werden.

Weiter vorteilhaft ist es, wenn die Strömungsrichtungen zweier Ventileinheiten entgegengesetzt verlaufen. Durch einen entgegengesetzten Verlauf der Strömungsrichtung zweier Ventileinheiten kann eine symmetrische und damit materialschonende Belastung des Ventils bei geöffneten Ventileinheiten erreicht werden.

Es hat sich als konstruktiv vorteilhaft erwiesen, wenn zwischen dem Ventileinlass und dem Ventilauslass eine Ventilkammer angeordnet ist, in welcher die Ventileinheiten zumindest teilweise angeordnet sind. Eine Ventilkammer kann auf fertigungstechnisch einfache Weise eine Anordnung der Ventileinheiten zwischen dem Ventileinlass und dem Ventilauslass ermöglichen. Durch eine teilweise Anordnung der Ventileinheiten in der Ventilkammer können die Ventileinheiten auch von ventilkammeraußen zugänglich sein. Ein Austausch einer oder mehrere der Ventileinheiten kann so auf einfache Weise erfolgen.

In einer Weiterbildung der Erfindung weist die Ventilkammer eine Strömungsrichtungsumkehr gegenüber der Hauptströmungsrichtung auf. Die Strömungsrichtungsumkehr ermöglicht, dass die Ventileinheiten entlang einer von der Hauptströmungsrichtung abweichenden Strömungsrichtung angeordnet werden können. Eine effizientere und kompaktere Bauform des Ventils kann auf diese Weise erzielt werden.

Bevorzugt weisen die Ventileinheiten jeweils einen Ventilsitz und ein mit dem Ventilsitz zusammenwirkendes Schließelement zum Schalten der Teilmengen des Fluidstroms auf. Das mit dem Ventilsitz zusammenwirkende Schließelement kann die von der Ventileinheit schaltbare Teilmenge des Fluidstroms konstruktiv einfach blockieren oder freigeben. Vorteilhafter Weise wird das Schließelement zum Schalten der Teilmenge von einem Vorschaltventil betätigt. Auf diese Weise kann das Schalten der Teilmengen des Fluidstroms mit geringem Energieeinsatz erfolgen.

Eine weitere Ausgestaltung der Erfindung sieht vor, dass die Ventilsitze der Ventileinheiten abströmseitig mit dem Ventilauslass strömungsverbunden sind. Die von den Ventileinheiten freigegebenen Teilmengen des Fluidstroms können über die Abströmseite des Ventilsitzes zu dem Ventilauslass geleitet werden.

Bevorzugt sind die Ventilsitze der Ventileinheiten jeweils über einen winkelförmigen Auslauf mit dem Ventilauslass strömungsverbunden. Durch einen winkelförmigen Auslauf kann auf fertigungstechnisch einfache Weise eine Strömungsverbindung zwischen dem Ventilsitz und dem Ventilauslass herstellbar sein. Insbesondere bei einer von der Hauptströmungsrichtung abweichenden Strömungsrichtung der Ventileinheiten, kann die Teilmenge des Fluidstroms durch einen winkelförmigen Auslauf auf einfache Weise entlang der Hauptströmungsrichtung umgeleitet werden.

In Weiterbildung der Erfindung weisen die Ventileinheiten unterschiedliche Strömungsquerschnitte auf. Durch unterschiedliche Strömungsquerschnitte können unterschiedlich große Teilmengen des Fluidstroms von den Ventileinheiten schaltbar sein. Die Zwischenschaltstellungen des Ventils können sich durch unterschiedliche Strömungsquerschnitte der Ventileinheiten voneinander unterscheiden. Die Strömungsquerschnitte können insbesondere durch die Durchmesser der Ventilsitze vorgegeben werden.

Gemäß einem Ausführungsbeispiel der Erfindung sind der Ventileinlass und/oder der Ventilauslass und/oder die Ventilsitze an einem gemeinsamen Ventilkörper einstückig angeformt. Eine einstückige Anformung an den gemeinsamen Ventilkörper kann auf konstruktiv vorteilhafter Weise die Anzahl der Bauteile und die Produktionszeit reduzieren.

Bevorzugt ist der Ventilkörper nach Art eines Rohres ausgebildet, dessen Rohrenden von dem Ventileinlass und dem Ventilauslass gebildet werden, wobei die Ventileinheiten jeweils eine Betätigungseinrichtung aufweisen, die an dem Rohrmantel angeordnet sind. Durch die Ausbildung des Ventilkörpers nach Art eines Rohres, dessen Rohrenden von dem Ventileinlass und dem Ventilauslass gebildet werden, kann das Ventil auf einfache und kompakte Weise als Komponente in eine Fluidleitung, insbesondere in einer Rohrleitung oder einer Pipeline, integriert werden. Die Betätigungseinrichtung kann die Ventileinheit betätigen und so die Schaltstellungen der Ventileinheit ändern. Die Anordnung der Betätigungseinrichtung an dem Rohrmantel des Ventilkörpers kann eine kompakte und in radialer Richtung flache Bauform ermöglichen.

Besonders bevorzugt weisen die Betätigungseinrichtungen Spulen auf, die sich parallel zum Ventilkörper erstrecken. Durch eine Bestromung der Spulen können die Ventileinheiten geschaltet werden. Bevorzugt kann eine Bestromung einer Spule die Ventileinheit in eine geöffnete Schaltstellung überführen und ein Stromlosschalten der Spule zu einem Schließen der Ventileinheit führen. Es wäre jedoch auch denkbar, dass die Bestromung der Spule die Ventileinheit in eine geschlossene Schaltstellung überführt. Ebenso könnte eine einmalige Bestromung der Spule ein bistabiles Schalten zwischen geschlossener und geöffneter Schaltstellung bewirken. In einer besonders bevorzugten Ausgestaltung können die Spulen Teile von Vorsteuerventilen sein, welche als Betätigungseinrichtungen der Ventileinheiten wirken.

In vorteilhafter Weise sind die Ventileinheiten als eigenmediumbetätigbare Servoventile ausgebildet. Durch Ausbildung als eigenmediumbetätigbare Servoventile können die Ventileinheiten mit geringem Energieaufwand geschaltet werden.

Eine weitere Ausgestaltung der Erfindung sieht vor, dass zumindest eine Ventileinheit mit einem Mengenregler ausgestattet ist. Durch einen Mengenregler kann die Menge der durch die Ventileinheit strömenden Teilmenge des Fluidstroms auf einfache Weise geregelt werden.

Weitere Einzelheiten und Vorteile eines erfindungsgemäßen Mengenreglers sowie eines Ventils sollen nachfolgend anhand der in den Figuren schematisch dargestellten Ausführungsbeispiele exemplarisch erläutert werden. Darin zeigen:
- Fig. 1: ein Schaltbild eines Ventils;
- Fig. 2: ein Schaltbild eines Ventils mit Mengenreglern;
- Fig. 3: ein Schaltbild eines Ventils mit einstellbaren Mengenreglern;
- Fig. 4: einen Schnitt entlang der Hauptströmungsrichtung durch einen Ventilkörper;
- Fig. 5: einen Schnitt entlang der Hauptströmungsrichtung durch ein Ventil mit einem unterschiedlichen Ventilkörper;
- Fig. 6, 7: einen Mengenregler;
- Fig. 8 -11: weitere Ausführungsformen eines Mengenregler mit unterschiedlichen Querschnittsverläufen.

Zunächst wird im Folgenden auf ein erfindungsgemäßes Ventil 1 eingegangen werden, bevor dann erfindungsgemäße Mengenregler 100 beschrieben werden.

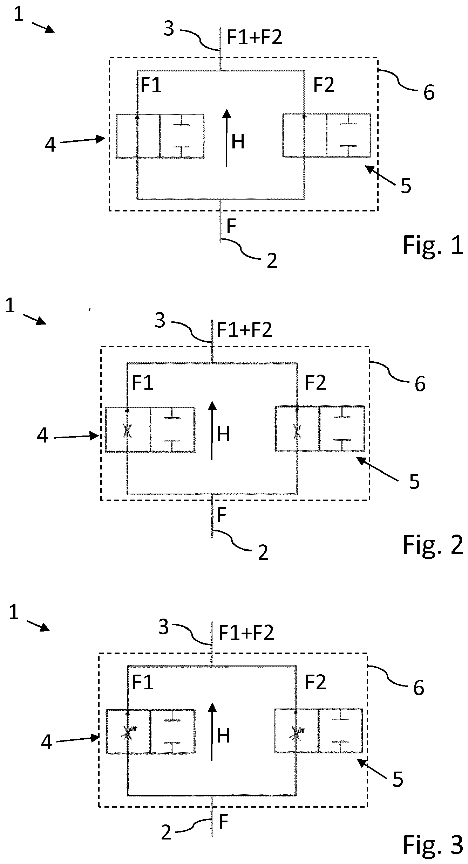

In Figur 1 ist ein schematisches Schaltbild eines Ventils 1 gezeigt. Über einen Ventileinlass 2 tritt ein Fluidstrom F entlang einer Hauptströmungsrichtung H in die Ventilkammer 6 ein. In der Ventilkammer 6 teilt sich der Fluidstrom F auf und wird zu zwei parallelgeschalteten Ventileinheiten 4, 5 geleitet. Beide Ventileinheiten 4, 5 weisen zwei Schaltstellungen auf, eine geschlossene und eine geöffnete. Wenngleich nicht dargestellt, kann das Ventil 1 auch weitere Ventileinheiten und/oder eine andere Anordnung der Ventileinheiten 4, 5 aufweisen.

In Fig. 1 sind beide Ventileinheiten 4, 5 in ihren geöffneten Schaltstellungen dargestellt. Die Ventileinheiten 4, 5 sind separat durch nicht dargestellte Betätigungseinrichtungen 4.4, 5.4 betätigbar, so dass sie unabhängig voneinander ihre Schaltstellung wechseln können. Für das dargestellte Ventil 1 ergeben sich somit insgesamt vier Schaltstellungen:
Schaltstellung 1: Beide Ventileinheiten 4, 5 sind geöffnet. Das Ventil 1 ist vollständig geöffnet.
Schaltstellung 2: Die Ventileinheit 4 ist geöffnet und die Ventileinheit 5 geschlossen. Das Ventil 1 befindet sich in einer teilweise geöffneten Zwischenschaltstellung.
Schaltstellung 3: Die Ventileinheit 4 ist geschlossen und die Ventileinheit 5 geöffnet. Das Ventil 1 befindet sich in einer teilweise geöffneten Zwischenschaltstellung.
Schaltstellung 4: Beide Ventileinheiten 4, 5 sind geschlossen. Das Ventil 1 ist vollständig geschlossen.

Jede Ventileinheit 4, 5 schaltet für sich gesehen nicht den gesamten Fluidstrom F, sondern nur eine Teilmenge F1, F2 des Fluidstroms F. Abhängig von den Schaltstellungen und den Nennweiten der Ventileinheiten 4, 5 ergibt sich die abströmseitig über einen Ventilauslass 3 aus der Ventilkammer 6 austretende Fluidmenge.

Bei einem geöffneten Ventil 1, bei welchem beide Ventileinheiten 4, 5 in ihren geöffneten Schaltstellungen die Teilmengen F1, F2 freigeben, treten beide Teilmengen F1, F2 gemeinsam entlang der Hauptströmungsrichtung H aus dem Ventilauslass 3 aus. Nehmen beide Ventileinheiten 4, 5 ihre geschlossenen Schaltstellungen ein, blockieren sie beide Teilmengen F1, F2. Das Ventil 1 ist geschlossen und kein Fluid tritt aus dem Ventilauslass 3 aus. In den übrigen Kombinationen der Schaltstellungen der Ventileinheiten 4, 5 ist das Ventil 1 teilweise geöffnet und nimmt eine Zwischenschaltstellung ein. Aus dem Ventilauslass 3 tritt dabei entweder die Teilmenge F1 oder die Teilmenge F2 aus.

Das schematische Schaltbild des Ventils 1 in Fig. 2 unterscheidet sich von der in Fig. 1 dargestellten Schaltung durch jeweils einen Mengenregler in den Ventileinheiten 4, 5. In der jeweiligen geöffneten Schaltstellung der Ventileinheiten 4, 5 regelt dieser Mengenregler die Menge des durch die Ventileinheiten 4, 5 strömenden Fluids. Die Teilmengen F1, F2 werden hierdurch beschränkt. Bei dem in Fig. 2 dargestellten Mengenregler handelt es sich um einen nicht einstellbaren Mengenregler, welcher eine vorgegebene Engstelle des Strömungsquerschnitts entlang der Strömungsrichtung des Fluids durch die Ventileinheit 4, 5 bildet. Im Übrigen entspricht das in Fig. 2 dargestellte Ventil 1 hinsichtlich seiner Komponenten und deren Eigenschaften dem Ventil 1 der Fig. 1.

Die Fig. 3 zeigt ein weiteres schematisches Schaltbild eines Ventils 1, welches einen einstellbaren Mengenregler 100 in den Ventileinheiten 4, 5 aufweist. Der einstellbare Mengenregler 100 ermöglicht es, die Engstelle entlang der Strömungsrichtung des Fluids einzustellen. Diese Einstellbarkeit erlaubt es, Einflüsse auf die durch die Ventileinheiten 4, 5 strömenden Fluidmengen auszugleichen, wie beispielsweise verändernde Drücke des Fluidstroms F. Bei dem einstellbaren Mengenregler 100 handelt es sich dabei bevorzugt um einen Mengenregler 100 zur selbstständigen Mengenregelung des Fluidstroms. Auf die Ausgestaltung dieser Mengenregler 100 wird nachfolgend noch gesondert eingegangen werden.

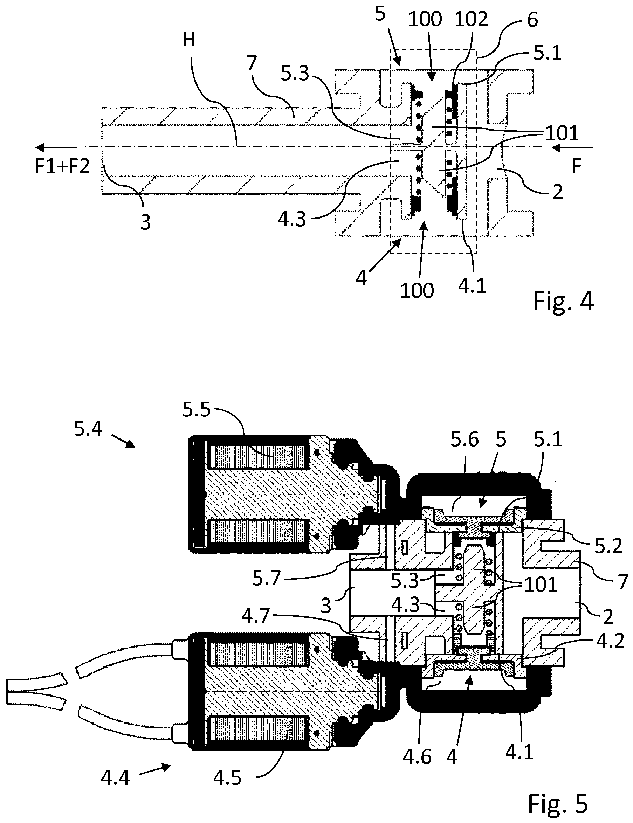

Die Figuren 4 und 5 zeigen schematische Schnitte entlang der Hauptströmungsrichtung H durch einen Ventilkörper 7 bzw. ein Ventil 1 mit unterschiedlich ausgebildeten Ventilkörpern 7.

Der Fluidstrom F tritt über den Ventileinlass 2 in das Ventil 1 ein und kann das Ventil durch den Ventilauslass 3 wieder verlassen. Der Fluidstrom F durchströmt das Ventil 1 axial entlang der Hauptströmungsrichtung H. Der Ventileinlass 2 und der Ventilauslass 3 sind parallel zueinander angeordnet und liegen koaxial auf der Hauptströmungsrichtung H.

Zwischen dem Ventileinlass 2 und dem Ventilauslass 3 befindet sich die Ventilkammer 6. In ihr sind die Ventileinheiten 4, 5 zumindest teilweise angeordnet. In den dargestellten Beispielen umfasst die Ventilkammer 6 die Ventilsitze 4.1, 5.1, die Auslässe 4.3, 5.3 sowie die Mengenregler 100 der Ventileinheiten 4, 5. Die Ventilkammer 6 wird quer zu der Hauptströmungsrichtung durch den Ventilkörper 7 begrenzt.

Der entlang der Hauptströmungsrichtung H in die Ventilkammer 6 einströmende Fluidstrom F wird in der Ventilkammer 6 durch eine Strömungsrichtungsumkehr derart abgelenkt, dass die Strömung quer zu Hauptströmungsrichtung H verläuft. Die Strömungsrichtungsumkehr erfolgt dabei im Wesentlichen rechtwinklig zu Hauptströmungsrichtung H. Der Fluidstrom F strömt gegen eine quer zur Hauptströmungsrichtung H ausgerichteten Teil des Ventilgehäuses 7 und wird von diesem zu den Ventileinheiten 4, 5 umgelenkt.

Durch eine weitere Strömungsrichtungsumkehr in der Ventilkammer 6 wird eine Strömungsrichtung durch die derart angeordneten Ventileinheiten 4, 5 quer zur Hauptströmungsrichtung H erreicht. Hierzu wird bei der Strömungsrichtungsumkehr die Strömungsrichtung im Wesentlichen um 180° geändert. Die Strömungsrichtung auf der Abströmseite der Ventileinheiten 4, 5 verläuft entgegengesetzt zu der anströmseitigen Strömungsrichtung. Die Strömungsrichtungen durch die Ventileinheiten 4, 5 verlaufen dabei entgegengesetzt zueinander. Die Strömungsrichtungen durch die Ventileinheiten 4, 5 sind hierbei radial nach innen gerichtet.

Zum Schalten der Teilmengen F1, F2 des Fluidstroms F umfassen die Ventileinheiten 4, 5 neben den Ventilsitzen 4.1, 5.1 mit ihnen zusammenwirkende Schließelement der 4.2, 5.2. Die Schließelemente 4.2, 5.2 sind außerhalb der Ventilkammer 6 angeordnet und schließen diese in radialer Richtung ab, wie in Fig. 5 dargestellt. Ebenso können die Schließelemente 4.2, 5.2 in der Ventilkammer 6 angeordnet sein.

In der geschlossenen Schaltstellung der Ventileinheit 4, 5 verschließt das Schließelement 4.2, 5.2 den Ventilsitz 4.1, 5.1. Das Schließelement 4.2, 5.2 umfasst einen vorzugsweise elastischen Teil, welcher in der geschlossenen Schaltstellung auf dem Ventilsitz 4.1, 5.1 aufliegt, und einen unelastischen Teil, welche das Schließelements 4.2, 5.2 stützt. Die Teilmenge F1, F2 kann in dieser geschlossenen Schaltstellung nicht durch den Ventilsitz 4.1, 5.1 hindurchströmen. Bei der Betätigung der Ventileinheit 4, 5 hebt sich das Schließelement 4.2, 5.2 von dem Ventilsitz 4.1, 5.1 ab. Die Teilmenge F1, F2 des Fluidstroms F kann über den abströmseitig mit dem Ventilauslass 3 strömungsverbundenen Ventilsitz 4.1, 5.1 durch das Ventil 1 hindurchströmen.

Die Verbindung zwischen dem Ventilsitz 4.1, 5.1 und dem Ventilauslass 3 wird durch einen winkelförmigen Auslass 4.3, 5.3 hergestellt. Der winkelförmige Auslass 4.3, 5.3 lenkt die Strömungsrichtung der durch die Ventileinheit 4, 5 hindurchtretenden Teilmenge F1, F2 des Fluidstroms F so ab, dass sie entlang der Hauptströmungsrichtung H aus dem Auslass 3 austritt. Die Auslässe 4.3, 5.3 sind dabei so ausgebildet, dass sie ventilauslassseitig parallel verlaufen. Die durch die Ventileinheiten 4, 5 hindurchströmenden Teilmengen F1, F2 des Fluidstroms F werden dabei parallelströmend zusammengeführt. Verwirbelungen des Fluidstroms F, welche bei aufeinander zuströmenden Teilmengen F1, F2 entstehen würden, werden so auf konstruktiv einfache Weise vermieden. In Fig. 4 unterscheiden sich die Querschnitte der Auslässe 4.3 und 5.3. So wird bei unterschiedlichen Teilmengen F1, F2 in beiden Auslässen 4.3, 5.3 der gleiche Druck erzielt.

Im Falle identischer Ventileinheiten 4, 5 unterscheiden sich die beiden Teilmengen F1, F2 des Fluidstroms F nicht voneinander. Die teilweise geöffneten Schaltstellungen der Ventileinheiten 4, 5 führen dabei zu identischen Regelungen des Fluidstroms F. Um die Zwischenschaltstellungen voneinander unterschiedlich auszugestalten, unterscheiden sich die Strömungsquerschnitte der Ventileinheiten 4, 5 voneinander. Ein unterschiedlicher Strömungsquerschnitt auch bei ansonsten gleichen Ventileinheiten 4, 5 wird durch einen unterschiedlichen Querschnitt des Ventilsitzes 4.1, 5.1 erreicht. Zusätzlich oder alternativ können in den Ventileinheiten 4, 5 angeordnete Mengenregler 100 zu unterschiedlichen Strömungsquerschnitten der Ventileinheiten 4, 5 führen. Insbesondere bei selbständig regelnden Mengenreglern 100 können Mengenregler 100 mit unterschiedlichem Regelverhalten verwendet werden. Auf derartige Mengenregler 100 wird unten stehend näher eingegangen.

In den Figuren 4 und 5 sind die Ventileinheit 2, der Ventilauslass 3 und die Ventilsitze 4.1, 5.1 jeweils an einem gemeinsamen Ventilkörper 7 einstückig angeformt. Ebenfalls sind die Mengenregler 100 teilweise einstückig an dem Ventilkörper 7 angeformt. Hierbei sind insbesondere Regelelemente 101 und Regelgehäuse 104 einteilig als Teile des Ventilkörpers 7 ausgebildet.

Die gezeigten Ventilkörper 7 sind nach Art eines Rohres ausgebildet, deren Enden von dem Ventileinlass 2 und dem Ventilauslass 3 gebildet werden.

Der in Fig. 4 gezeigte Ventilkörper 7 ist als ein T-förmiger Spritzgusskörper entlang der Hauptströmungsrichtung H asymmetrisch ausgebildet. Der Ventileinlass 2 geht direkt in die Ventilkammer 6 über, während die Verbindung zwischen der Ventilkammer 6 und dem Ventilauslass 3 durch ein vergleichsweise langes Rohrstück gebildet wird. Quer zu der Hauptströmungsrichtung, weist der Ventilkörper 7 flanschartige Anschlüsse auf. Über diese Anschlüsse können die nicht in der Ventilkammer 6 angeordneten Teile der Ventileinheiten 4, 5 mit dem Ventilkörper 7 verbunden werden.

Demgegenüber ist der kreuzförmige, gefräste Ventilkörper 7 des in Fig. 5 gezeigten Ventils 1 entlang der Hauptströmungsrichtung H im Wesentlichen symmetrisch. Zwischen dem Ventileinlass 2 und der Ventilkammer 6 sowie zwischen der Ventilkammer 6 und dem Ventilauslass 3 erstreckt sich eine im Wesentlichen gleichlanges Rohrstück. Mittels flanschartiger Anschlüsse sind die Ventileinheiten 4, 5 an dem Ventilkörper 7 angeordnet. Die Schließelemente 4.2, 5.2 sind dabei zwischen dem Ventilkörper 7 und den Gehäusen der Ventileinheiten 4, 5, welche einstückig mit dem Gehäusen der Betätigungseinrichtungen 4.4, 5.4 ausgebildet sind, angeordnet. Die Schließelemente 4.2, 5.2 dienen zugleich als Dichtung dieser Anschlussstellen nach kammeraußen. Die Schließelemente 4.2, 5.2 und die Gehäuse der Ventileinheiten 4, 5 umschließen in Fig. 5 Steuerräume 4.6, 5.6 der Ventileinheiten 4, 5 außerhalb der Ventilkammer 6.

An dem Rohrmantel des Ventilkörpers 7 sind im Ausführungsbeispiel der Fig. 5 Betätigungseinrichtungen 4.4, 5.4 der Ventileinheiten 4, 5 angeordnet. Die Betätigungseinrichtungen 4.4, 5.4 weisen sich parallel zum Ventilkörper 7 erstreckende Spulen 4.5, 5.5 auf. Durch die zum Ventilkörper 7 parallele Ausrichtung der Spulen 4.5, 5.5 können die Betätigungseinrichtungen 4.4, 5.4, im Vergleich zu vom Ventilkörper 7 abstehenden Spulen, flach an dem Ventilkörper 7 anliegen. Auf diese Weise ergibt sich eine kleine radiale Abmessung des Ventils 1. Mittels der Spulen 4.5, 5.5 wird das Schließelement 4.2, 5.2 der Ventileinheit 4, 5 betätigt.

Die in Fig. 5 gezeigten Ventileinheiten 4, 5 sind dabei nach Art eigenmediumbetätigter Servoventile mit einem Vorsteuerventil als Betätigungseinrichtung 4.4, 5.4 ausgebildet. Unter Ausnutzung des anliegenden Fluiddrucks lassen sie sich mit geringem Kraftaufwand und energiesparend betätigen. Abhängig von der Bestromung der Spulen 4.5, 5.5 öffnet oder schließt sich ein nicht näher dargestelltes Vorsteuerventil der jeweiligen Ventileinheit 4, 5. Bei geöffnetem Vorsteuerventil kann das in dem Steuerraum 4.6, 5.6 befindliche Fluid über einen Entlastungskanal 4.7, 5.7 in Richtung des Ventilauslasses 3 abgeleitet werden. Der Entlastungskanal 4.7, 5.7 erstreckt sich hierzu als eine verschließbare Verbindung zwischen dem Vorsteuerventil und dem Ventilauslass 3 durch den Ventilkörper 7. Bei geöffnetem Vorsteuerventil nimmt der Druck im Steuerraum 4.6, 5.6 ab. Durch den anströmseitigen Druck des Fluidstroms F auf das Schließelement 4.2, 5.2 wird selbiges von dem Ventilsitz 4.1, 5.1 abgehoben. Die Teilmenge F1, F2 wird freigegeben. Durch eine erneute Betätigung der Betätigungsvorrichtung 4.4, 5.4 schließt das Vorsteuerventil den Entlastungskanal 4.7, 5.7. Über ein nicht dargestellten Steuerkanal strömt Fluid von der Anströmseite des Schließelements 4.2, 5.2 in den Steuerraum 4.6, 5.6. Da dieses nicht mehr über den Entlastungskanal 4.7, 5.7 abfließen kann, erhöht sich der Druck in dem Steuerraum 4.6, 5.6. Das Schließelement 4.2, 5.2 wird durch den sich aufbauenden Druck auf den Ventilsitz 4.1, 5.1 gepresst. Der Ventilsitz 4.1, 5.1 wird verschlossen und die Teilmenge F1, F2 des Fluidstrom F blockiert.

Im Folgenden soll nun auf Ausführungsformen des Mengenreglers 100, wie er bereits in den Figuren 4 und 5 im Ventil gezeigt ist, eingegangen werden.

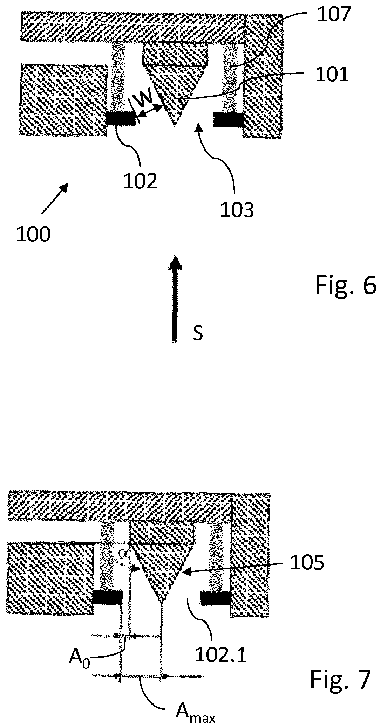

In Fig. 6 und Fig. 7 ist ein Mengenregler 100 dargestellt, welcher aus der Strömungsrichtung S durch einen Fluidstrom F und insbesondere einer Teilmenge F1, F2 des Fluidstrom F angeströmt wird. Der Mengenregler 100 umfasst dabei 2 gegeneinander bewegbare Regelelemente 101, 102 welche einen Regelspalt 103 begrenzen. Durch eine Relativbewegung der Regelelemente 101, 102 wird die Spaltweite W des sich zwischen den Regelelementen 101, 102 erstreckenden Regelspalts 103 in Abhängigkeit des anströmseitigen Drucks des Fluidstrom F eingestellt. Beide Regelelemente 101, 102 sind als formstabile Anströmkörper ausgebildet, welche in ihrer Form durch das anströmende Fluid nicht verändert werden. Die formstabilen Anströmkörper bestehen aus temperaturbeständigen Materialien, wie beispielsweise Hartkunststoff, Metall, Duroplast, Keramik, Thermoplast oder Glas.

Die Regelelemente 101, 102 sind entlang der Strömungsrichtung S relativ zueinander bewegbar. Das erste Regelelement 101 weist einen variierenden Querschnitt mit entlang der Strömungsrichtung S verlaufenden Querschnittsverlauf 105 nach Art einer Pyramide auf. Der Querschnittsverlauf 105 schließt dabei einen Winkel α quer zu Strömungsrichtung S ein. Vorzugsweise liegt dieser Winkel α in einem Winkelbereich zwischen 0 und 180°.

Durch die Relativbewegung der beiden Regelelemente 101, 102 kann der Abstand zwischen den beiden Regelelementen quer zur Strömungsrichtung S zwischen einem maximalen Abstand Aₘₐₓ und einem minimalen Abstand A₀ verändert werden. Der minimale Abstand A₀ entspricht dabei vorzugsweise einem Wert von 0 mm.

Das erste Regelelement 101 steht fest und wird durch den entlang der Strömungsrichtung S strömenden Fluidstrom F in seiner Position nicht verändert. Es ist an einem weiteren Element mit quaderförmigen Querschnittsverlauf angeordnet. Das zweite Regelelement 102 ist hingegen relativ zu dem ersten Regelelement 101 bewegbar angeordnet. Durch den Druck eines anströmseitigen Fluidstroms F ändert sich seine Position entlang der Strömungsrichtung S. Die Regelelemente 101, 102 sind durch den Druck des Fluidstroms F aufeinander zu bewegbar.

Ein Rückstellelement 107, vorzugsweise eine Feder, erstreckt sich zwischen den beiden Regelelementen 101, 102 und übt eine Rückstellkraft zwischen diesen aus. Bei einer Bewegung des Regelelements 102 in Richtung des Regelelements 101 bewegt sich das Regelelement 102 entgegen der Rückstellkraft des Rückstellelements 107. Das Rückstellelement 107 wirkt eine Rückstellkraft auf das Regelelement 102 aus, welche in Richtung der Ausgangsstellung des Regelelements 102 gerichtet ist. Sinkt der das Regelelement 102 bewegende Druck des Fluidstroms F ab, bewegt die Rückstellkraft das Rückstellelements 107 das Regelelements 102 von dem Regelelement 101 weg. Die Ausgangsstellung des Regelelements 102 ist in den Figuren 6 und 7 gezeigt. Reicht der Druck des Fluidstroms F nicht aus, um das Regelelement 102 entgegen der Rückstellkraft des Rückstellelements 107 zu bewegen, nimmt das Regelelement 102 seine Ausgangsstellung ein bzw. verbliebt in dieser.

Das zweite Regelelement 102 ist in den gezeigten Ausführungsbeispielen als Regelblende mit einer Durchgangsbohrung 102.1 ausgebildet. In diese Durchgangsbohrung 102.1 tritt das zapfenförmige erste Regelelement 101 zur Einstellung der Spaltweite W des Steuerspalts ein. Beide Regelelemente 101, 102 sind koaxial zueinander angeordnet. Die relative Bewegung der Regelblende 102 entlang der Strömungsrichtung S führt zu einem tieferen Eintreten des zapfenförmigen Regelelements 101 in die Durchgangsbohrung 102.1. Die Spaltweite W wird dabei verkleinert. Die Regelblende 102 ist dabei schwimmend entlang der Strömungsrichtung S gelagert. Durch diese Lagerung kann ein Verkanten der Regelblende 102 vermieden werden. Da ein Verkanten einer Bewegung der Regelblende 102 entgegen stünde und somit auch der Mengenregelung, wird durch die schwimmende Lagerung die Zuverlässigkeit des Mengenreglers 100 verbessert.

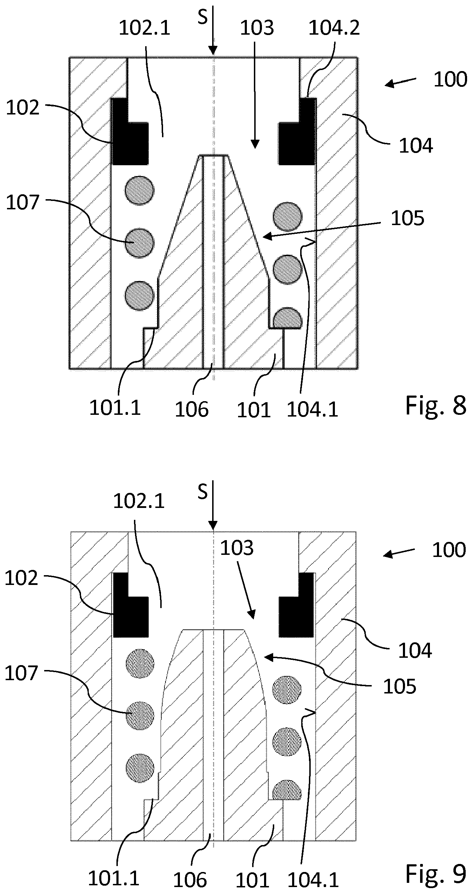

In den Figuren 8 bis 11 sind weitere Ausführungsbeispiele eines Mengenreglers 100 gezeigt. Die wesentlichen Funktionen dieser Mengenregler 100 entsprechen denen des voran beschriebenen Mengenreglers und dessen Komponenten mit den gleichen Bezugszeichen. Im Folgenden wird daher nur auf die Unterschiede dieser Mengenregler gegenüber den Mengenreglern in den voran beschriebenen Figuren eingegangen.

In Fig. 8 ist ein Mengenregler 100 gezeigt, dessen Regelelement 101 einen Bypass 106 umfasst. Durch den Bypass 106 strömt ein Teil des Fluidstroms F selbst bei einem geschlossenen Regelspalt 103 durch den Mengenregler 100. Der Bypass 106 bildet eine direkte, insbesondere geradlinige Verbindung zwischen der Anströmseite und der Abströmseite des Mengenreglers 100.

Die Regelelemente 101, 102 sind in einem Regelgehäuse 104 angeordnet. Bei dem Regelgehäuse 104 kann es sich um einen Teil des Ventilkörpers 107 handeln oder um eine eigenständige Komponente. Das Regelelement 101 steht gegenüber dem Regelgehäuse 104 fest. Es kann zudem einteilig an dem Regelgehäuse 104 angeformt sein. Die Innenwandung 104.1 des Regelgehäuses 104 führt die Bewegung des Regelelements 102.

Ein Vorsprung 104.2 des Regelgehäuses 104 wirkt als einseitiger Anschlag des Regelelements 102 entgegen der Strömungsrichtung S. Der Vorsprung 104.2 legt die in der Figur gezeigte Ausgangsstellung der Regeleinheit 102 fest. Die Wanddicke des Regelgehäuses 104 ist anströmseitig größer als abströmseitig.

Ein Vorsprung 101.1 des Regelelements 101 stützt das Rückstellelement 107 entlang der Strömungsrichtung S ab. Das Rückstellelement 107 ist als eine Spiralfeder ausgebildet, welche zwischen dem Vorsprung 101.1 und dem Regelelement 102 angeordnet ist.

Das Regelelement 101 weist einen Querschnittsverlauf 105 nach Art eines Kegels auf. In einer komplementären Geometrie, ist die Regelblende 102 ringförmig ausgebildet.

Der spritzgegossene Mengenregler 100 in Fig. 9 entspricht in Wesentlichen dem Mengenregler 100 in Fig. 8. Im Unterschied hierzu weist das Regelelement 101 einen im Wesentlichen pistolenkugelförmigen Querschnittsverlauf 105 auf.

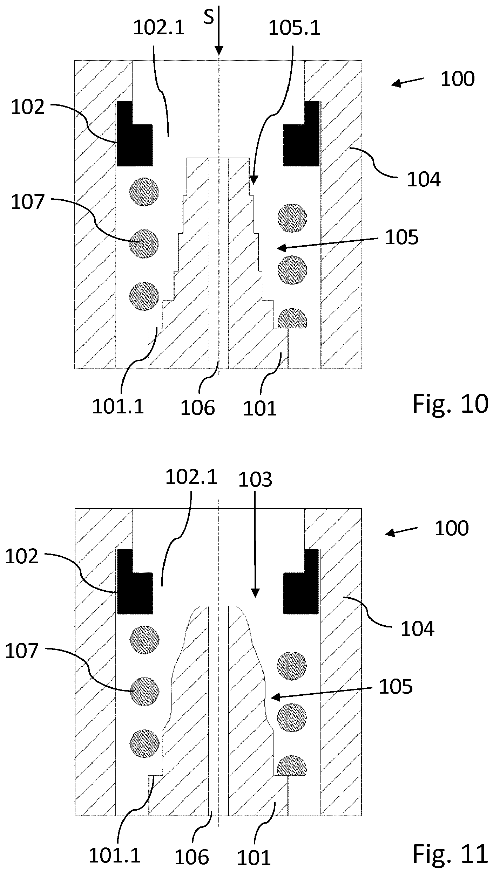

In Fig. 10 ist ein Mengenregler 100 mit einem weiteren Querschnittsverlauf 105 des Regelelements 101 dargestellt. Der Querschnittsverlauf 105 ist nach Art eines stufenförmigen Kegelstumpfs ausgebildet. Er weist stufenförmige Querschnittssprünge 105.1 auf. Die Querschnittssprünge 105.1 unterscheiden sich voneinander. Sie weisen entlang der Strömungsrichtung S einen unterschiedlichen Abstand voneinander auf. In ihrer Sprunghöhe, dem Unterschied des Querschnitts vor und hinter dem Querschnittssprung 105.1, unterscheiden sie sich ebenfalls.

Die Fig. 11 zeigt noch einen weiteren Querschnittsverlauf 105. Das Regelelement 101 weist einen vergleichsweise komplizierten und in Wesentlichen keilförmigen Querschnittsverlauf 105 auf. Der Querschnittsverlauf 105 verläuft stetig, ohne Querschnittssprünge 105.1. Bereiche des Regelelements 101 unterschiedlichen Querschnitts werden durch den geschwungen Querschnittsverlauf 105 miteinander verbunden. Die Spaltweite W des Regelspalts 103 ist bei einer Relativbewegung der Regelelemente 101, 102 im Wesentlichen stetig einstellbar.

Die Regelelemente 101 können auch andere Querschnittsverläufe 105 aufweisen. So sind die Querschnittsverläufe 105 der in Fig. 4 dargestellten Mengenregler 100 keilförmig. Der Abstand zwischen den Regelelementen 101, 102 und damit die Spaltweite W des Regelspalts 103 ändert sich bei einer Relativbewegung der Regelelementen 101, 102 nur auf einer Seite des Regelelements 101.

Die Regelelemente 101 der Mengenregler 100 in Fig. 5 weisen Querschnittsverläufe 105 nach Art von Kegelstümpfen auf. Bei diesen schließen sich in dem unteren Bereich der kegelstumpfförmigen Querschnittsverläufe 105 zusätzliche noch zylinderförmigere Querschnittsverläufe 105 an.

Das Regelelement 102 kann, wenngleich nicht dargestellt, alternativ oder zusätzlich einen variierenden Querschnitt mit einem entlang der Strömungsrichtung S verlaufenden Querschnittsverlauf 105 aufweisen. Es wäre auch denkbar, dass das zapfenförmige Regelelement 101 bewegbar ist, während die Regelblende 102 feststeht.

Mit Hilfe des vorstehend beschriebenen Mengenreglers 100 und dem Ventil 1 ist es möglich, die Mengenregelung eines Fluidstroms für Einflüsse des Fluids, wie Änderungen der Temperatur des Fluidstroms, weniger anfällig auszugestalten.

### Bezugszeichen:

- 1: Ventil
- 2: Ventileinlass
- 3: Ventilauslass
- 4: Ventileinheit
- 4.1: Ventilsitz
- 4.2: Schließelement
- 4.3: Auslauf
- 4.4: Betätigungseinrichtung
- 4.5: Spule
- 4.6: Steuerraum
- 4.7: Entlastungskanal
- 5: Ventileinheit
- 5.1: Ventilsitz
- 5.2: Schließelement
- 5.3: Auslauf
- 5.4: Betätigungseinrichtung
- 5.5: Spule
- 5.6: Steuerraum
- 5.7: Entlastungskanal
- 6: Ventilkammer
- 7: Ventilkörper
- 100: Mengenregler
- 101: Regelelement
- 101.1: Vorsprung
- 102: Regelelement
- 102.1: Durchgangsausnehmung
- 103: Regelspalt
- 104: Regelgehäuse
- 104.1: Innenwandung
- 104.2: Vorsprung
- 105: Querschnittsverlauf
- 105.1: Querschnittssprung
- 106: Bypass
- 107: Rückstellelement

- Aₘₐₓ: Abstand
- A₀: Abstand
- F: Fluidstrom
- F1: Teilmenge
- F2: Teilmenge
- H: Hauptströmungsrichtung
- S: Strömungsrichtung
- W: Spaltweite
- α: Winkel

## Patentansprüche

1. Mengenregler zur selbstständigen Mengenregelung eines Fluidstroms (F) mit mindestens zwei gegeneinander bewegbaren, einen Regelspalt (103) begrenzenden Regelelementen (101, 102), wobei die Spaltweite (W) des Regelspalts (103) über eine Relativbewegung der Regelelemente (101, 102) druckabhängig einstellbar ist,
**dadurch gekennzeichnet,**
**dass** die Regelelemente (101, 102) als formstabile Anströmkörper ausgebildet sind.

2. Mengenregler nach Anspruch 1, **dadurch gekennzeichnet, dass** die formstabilen Anströmkörper aus temperaturbeständigem Material bestehen, wie beispielsweise Hartkunststoff, Metall, Duroplast, Keramik, Thermoplast oder Glas.

3. Mengenregler nach einem der vorangehenden Ansprüche, **dadurch gekennzeichnet, dass** die Regelelemente (101, 102) in Richtung einer Strömungsrichtung (S) relativ bewegbar sind.

4. Mengenregler nach Anspruch 3, **dadurch gekennzeichnet, dass** mindestens ein erstes Regelelement (101) einen variierenden Querschnitt mit einem entlang der Strömungsrichtung (S) verlaufenden Querschnittsverlauf (105) aufweist, insbesondere nach Art einer Pyramide, eines Kegels, eines Pyramidenstumpfs, eines Kegelstumpfs und/oder eines Keils.

5. Mengenregler nach Anspruch 4, **dadurch gekennzeichnet, dass** der Querschnittsverlauf (105) stufenförmige, insbesondere unterschiedliche Querschnittssprünge (105.1) aufweist.

6. Mengenregler nach Anspruch 4, **dadurch gekennzeichnet, dass** der Querschnittsverlauf (105) im Wesentlichen stetig, insbesondere geschwungen verläuft.

7. Mengenregler nach einem der Ansprüche 4 bis 6, **dadurch gekennzeichnet, dass** das erste Regelelement (101) feststeht und ein zweites Regelelement (102) bewegbar ist.

8. Mengenregler nach einem der vorangehenden Ansprüche, **dadurch gekennzeichnet, dass** die Regelelemente (101, 102) durch den Druck des Fluidstroms (F), insbesondere entgegen einer Rückstellkraft, aufeinander zubewegbar sind.

9. Mengenregler nach einem der vorangehenden Ansprüche, **dadurch gekennzeichnet, dass** ein Rückstellelement (107) eine Rückstellkraft zum Bewegen der Regelelemente (101, 102) in ihre Ausgangsstellungen auf mindestens ein Regelelement (101, 102) ausübt, insbesondere bei sich aufeinander zubewegenden Regelelementen (101, 102).

10. Mengenregler nach einem der vorangehenden Ansprüche, **dadurch gekennzeichnet, dass** ein Regelelement (101, 102) als Regelblende (102), insbesondere als ringförmige Regelblende, mit einer Durchgangsausnehmung (102.1) ausgebildet ist.

11. Mengenregler nach Anspruch 10, **dadurch gekennzeichnet, dass** ein zapfenförmiges Regelelement (101) zur Einstellung der Spaltweite (W) des Regelspalts (103) in die Durchgangsausnehmung (102.1) eintritt.

12. Mengenregler nach Anspruch 10 oder 11, **dadurch gekennzeichnet, dass** die Regelblende (102) entlang der Strömungsrichtung (S) schwimmend gelagert ist.

13. Mengenregler nach einem der vorangehenden Ansprüche, **dadurch gekennzeichnet, dass** eines der Regelelemente (101, 102) einen Bypass (106) umfasst.

14. Mengenregler nach einem der vorangehenden Ansprüche, **dadurch gekennzeichnet, dass** die Regelelemente (101, 102) in einem Regelgehäuse (104) angeordnet sind und ein Regelelement (102) gegenüber dem Regelgehäuses (104) feststeht.

15. Mengenregler nach Anspruch 14, **dadurch gekennzeichnet, dass** eine Innenwandung (104.1) des Regelgehäuse (104) die Bewegung eines Regelelements (101, 102) führt.

16. Ventil zum Schalten eines Fluidstroms (F), **gekennzeichnet durch** einen Mengenregler (100) nach einem der vorangehenden Ansprüche.
